# EUROPÄISCHE PATENTSCHRIFT

(11) **EP 3 958 653 B1**
(45) Veröffentlichungstag und Bekanntmachung des Hinweises auf die Patenterteilung: **06.05.2026**
(21) Anmeldenummer: 21191609.3
(22) Anmeldetag: 17.08.2021
(51) Int. Cl.: H05B 47/11, H05B 45/58, H05B 47/165, H05B 47/115

(54) **LEUCHTE MIT SENSOREINRICHTUNG ZUR MESSUNG VON REFLEXIONS- UND UMGEBUNGSLICHT**
LUMINAIRE WITH SENSOR DEVICE FOR MEASURING REFLECTED AND AMBIENT LIGHT
LUMINAIRE POURVU DE DISPOSITIF CAPTEUR PERMETTANT DE MESURER LA LUMIÈRE RÉFLÉCHISSANTE ET AMBIANTE

(30) Priorität: 20.08.2020 DE 102020121841
(43) Veröffentlichungstag der Anmeldung: 23.02.2022
(73) Patentinhaber: Siteco GmbH, 83301 Traunreut (DE)
(72) Erfinder: Wuppinger, Bernhard, 83362 Surberg (DE); Gernhäuser, Alexander, 83376 Truchtlaching (DE)
(74) Vertreter: Schmidt, Steffen

(56) Entgegenhaltungen:
- EP-A1- 2 566 303
- WO-A1-2010/115801
- WO-A1-2014/180647
- CN-B- 108 343 905
- DE-A1- 102008 054 050

## Beschreibung

Die vorliegende Erfindung betrifft eine Leuchte, insbesondere eine Straßenleuchte oder eine Innenraumleuchte, mit einer Sensoreinheit und einer Steuereinheit, welche eine spektrale Auswertung des Lichts der Umgebung und des von der Leuchte reflektierten Lichts zur Steuerung der Leuchte ermöglichen.

Leuchten, die im Außenbereich eingesetzt werden, müssen abhängig vom Tagesverlauf ein- bzw. ausgeschaltet werden. Normalerweise werden solche Leuchten mithilfe von vordefinierten Zeiten in den Leuchtenparametern, durch eine zusätzlich benötigte Hardware an der Leuchte (z.B. Zhaga-Sockel) oder eine zentrale Steuerungsinfrastruktur (SLC, Tvilight etc.) geregelt. Demzufolge wird der Lichtstrom nur statisch und durch zeitgesteuerte, vordefinierte Dimmung angepasst. Ein Problem dabei ist jedoch, dass auf sich ändernde Umgebungsbedingungen nicht dynamisch reagiert werden kann.

Ferner ist es bekannt, Leuchten mit Lichtsensoren auszustatten, um die Leuchte abhängig von der gemessenen Helligkeit zu regeln. Jedoch weist dieses System insbesondere im Außenraum den Nachteil auf, dass der Lichtstrom der Leuchte nicht in Abhängigkeit von Umweltbedingungen, insbesondere Nebel, Schnee, etc. eingestellt werden kann.

Aus der WO 2014/180647 A1 ist eine Leuchte zur Straßenbeleuchtung mit einem Lichtsensor bekannt, wobei der Lichtsensor speziell dafür eingerichtet ist, um spiegelnd reflektiertes Licht und Streulicht separat zu messen. Aus dem Verhältnis der beiden Größen kann auf Umweltbedingungen oder Fahrbahnbedingungen geschlossen werden und die Leuchte ist dafür eingerichtet, den Lichtstrom entsprechend den Umweltbedingungen anzupassen. Jedoch ist diese Lösung verhältnismäßig aufwendig, weil der Sensor dafür eingerichtet sein muss, um aus verschiedenen Raumwinkeln Licht zu messen und ferner eine separate Lichtquelle in Form eines Lasers benötigt wird, um das Messlicht für den Sensor bereitzustellen.

EP 2566303 A1 offenbart ein Beleuchtungssystem, das Innen- und Außenlichtsensoren zum Erfassen von Beleuchtungsniveau und - farbe verwendet. Eine Beleuchtungseinheit hat eine gesteuerte Farbe und Intensität, so dass eine Farbanpassungszone definiert werden kann, wo die Innenraumbeleuchtung eine Farbtemperatur hat, die auf den äußeren Lichtbedingungen basiert.

WO 2010 11 5801 A1 offenbart ein Retrofit-LED-Modul mit einem Träger mit mindestens einer LED, ferner mit einem Retrofit-Sockel zur mechanischen und elektrischen Kontaktierung mit herkömmlichen Lampenfassungen und einer Elektronik zur Ansteuerung der mindestens einen LED, wobei mindestens ein Teil der Elektronik in den Träger integriert ist und die Elektronik einen Lichtsensor umfasst, und/oder einen Tageslichtsensor und/oder einen Farbsensor und/oder die zugehörige Elektronik zur Verarbeitung des Signals.

Aufgabe der vorliegenden Erfindung ist es, eine baulich einfache und kostengünstige Lösung für eine Leuchte bereitzustellen, die es erlaubt, den Lichtstrom der Leuchte an gemessenen Umgebungsbedingungen anzupassen.

Gelöst wird die Aufgabe durch eine Leuchte nach Anspruch 1.

Eine Besonderheit der erfindungsgemäßen Leuchte ist, dass sowohl Umgebungslicht als auch Reflexionslicht der Lichtquelle der Leuchte gemeinsam gemessen wird und spektral ausgewertet wird. Aus der spektralen Auswertung lässt sich gemäß der vorliegenden Erfindung der Anteil des von der Lichtquelle der Leuchte selbst reflektierten Lichts im Verhältnis zu dem Anteil des Umgebungslichts ermitteln. Ferner lässt sich dann aus der Lichtintensität und der Spektralverteilung des Umgebungslichts auf Umweltbedingungen in der Nähe der Leuchte schließen. Eine Steuereinrichtung der Leuchte ist erfindungsgemäß dafür angepasst, diese Auswertung des Lichtspektrums zum Erfassen von Umgebungsbedingungen vorzunehmen und die Lichtquelle der Leuchte in Abhängigkeit der detektierten Umgebungsbedingungen zu steuern.

Gemäß einer bevorzugten Ausführungsform sind die Lichtquelle und die Sensoreinheit hinter einer gemeinsamen transparenten Abdeckung der Leuchte angeordnet. Dies ist nicht nur baulich einfacher zu realisieren, sondern biete außerdem den Vorteil, dass die Sensoreinheit das Licht der Lichtquelle der Leuchte empfangen kann, welches an der Abdeckung zurückreflektiert wird, neben dem Umgebungslicht, welches von außen durch die Abdeckung hindurch auf den Sensor auftrifft.

Gemäß einer bevorzugten Ausführungsform ist die Steuereinrichtung dafür eingerichtet, um aus einer zeitlichen Veränderung des Lichtspektrums über den Tagesverlauf den Sonnenaufgang, den Sonnenuntergang und/oder die Mondphase zu bestimmen und in Abhängigkeit einer oder mehrerer dieser Parameter die Helligkeit der Lichtquelle zu regeln. Das Licht der Sonne bei unterschiedlichen Sonnenständen unterscheidet sich in der spektralen Zusammensetzung von dem Licht der Lichtquelle der Leuchte selbst, so dass die Steuereinrichtung in der Lage ist, durch die spektrale Auflösung die beiden Lichtanteile zu unterscheiden und ferner den Sonnenstand festzustellen. Diese Information kann dann unmittelbar zur Regelung der Helligkeit der Lichtquelle der Leuchte genutzt werden. Das Gleiche gilt auch für das Licht unterschiedlicher Mondphasen. In Abhängigkeit von der Mondphase kann so auch in der Nacht die Helligkeit der Leuchte an das Umgebungslicht angepasst werden.

Gemäß einer bevorzugten Ausführungsform ist die Steuereinrichtung dafür eingerichtet, um eine Änderung des von der Lichtquelle reflektierten Lichtanteils im Verhältnis zu dem von der Lichtquelle abgegebenen Lichtintensität zu bestimmen und die Helligkeit der Lichtquelle aufgrund der geänderten Reflexionsbedingungen anzupassen. Der Anteil des von der Lichtquelle reflektierten Lichts ändert sich mit den Umgebungsbedingungen der Leuchte. Beispielsweise wird bei Nebel, Schnee oder Regen ein höherer Anteil des Lichts reflektiert, als bei trockenem Wetter. Ferner machen es die genannten Umweltbedingungen erforderlich, den Lichtstrom der von der Lichtquelle der Leuchte abgegebenen Lichts an die Sichtverhältnisse anzupassen. Daher kann die Reflexionsmessung zur Anpassung der Helligkeit der Lichtquelle sehr gut genutzt werden.

Gemäß einer bevorzugten Ausführungsform ist die Steuereinrichtung dafür eingerichtet, um aus dem gemessenen Lichtspektrum eine Farbtemperatur des Umgebungslichts zu bestimmen, und die eine Lichtquelle oder die eine Lichtquelle in Verbindung mit weiteren Lichtquellen der Leuchte ist dafür eingerichtet, Licht unterschiedlicher Farbtemperaturen zu erzeugen, wobei die Steuereinrichtung in Abhängigkeit der gemessenen Farbtemperatur die wenigstens eine Lichtquelle ansteuert, um eine Farbtemperatur des abgegebenen Lichtes in Abhängigkeit der gemessenen Farbtemperatur zu verändern, insbesondere daran anzupassen. Diese Ausführungsform ist beispielsweise für Innenraumleuchten bevorzugt. Das durch Fenster in den Innenraum gelangende natürliche Licht weist eine der Tageszeit entsprechende charakteristische Farbtemperatur auf. Die Beleuchtung im Innenraum, welche dafür bestimmt ist, dieses Tageslicht zu unterstützen, kann in der Farbtemperatur an das jeweils einfallende Tageslicht angepasst werden. Dadurch entsteht im Innenraum der Eindruck einer natürlichen Tageslichtbeleuchtung, obgleich diese zum Teil durch Kunstlicht erzeugt wird.

Gemäß einer bevorzugten Ausführungsform ist die Steuereinrichtung dazu eingerichtet, eine zeitlich Abfolge von Intensitätsschwankungen aus der gemessenen Lichtintensität zu bestimmen und bei Vorliegen einer signifikanten Änderung der Intensitätsschwankungen auf eine Störgröße des Umgebungslichts zu schließen und die Lichtabgabe der Lichtquelle in Abhängigkeit der Störgröße anzupassen. Beispielsweise kann durch Äste im Bereich der Leuchte eine Schattenbildung erzeugt werden. Diese weist aufgrund der Windbewegung der Äste eine von anderen Störeinflüssen sehr gut zu unterscheidende Charakteristik auf. Das Licht der Leuchte kann in Bezug auf diese Verschattung angepasst werden. Ferner ist es möglich, dass in Ausführungsformen der Leuchten auch eine Schnittstelle vorgesehen ist, um eine entsprechende Nachricht über die Störgröße an eine Zentrale weiterzuleiten, um ggf. den Störeinfluss zu beseitigen.

Gemäß einer bevorzugten Ausführungsform ist die Steuereinrichtung dafür eingerichtet, um aus einer Änderung der Lichtintensität und/oder des Lichtspektrums des von der Lichtquelle reflektierten Lichts auf eine Alterung der Lichtquelle zu schließen und die Ansteuerung der Lichtquelle entsprechend der Alterung der Lichtquelle zur Kompensation der Alterung zu verändern. Die Lichtquellen der Leuchten, z.B. LEDs, sind dafür bekannt, dass sie im Laufe ihrer Betriebszeit bei einem gegebenen Betriebsstrom in der Intensität nachlassen. Dieser Effekt kann ausgeglichen werden, indem der Betriebsstrom erhöht wird. Ferner ist es auch bekannt, dass Lichtquellen ihre spektrale Verteilung über die Zeit verändern. Dies kann bei Lichtquellen, deren Farbe elektronisch veränderbar ist, auch ausgeglichen werden. Da die erfindungsgemäße Leuchte ohnehin die spektrale Zusammensetzung des reflektierten Lichts der Leuchte misst, kann aus diesen Daten auch gleich in besonders einfacher Weise die Alterungserscheinungen der Lichtquelle durch Verändern des Lichtstroms oder durch Verändern der Lichtfarbe entgegengewirkt werden. In einer weiteren Ausführungsform ist es sogar möglich, bei einer starken Abweichung auf einen möglichen vorzeitigen Ausfall des Leuchtmittels zu schließen und diese Information von dem Steuergerät über eine entsprechende Schnittstelle weiterzuleiten, so dass Wartungsarbeiten an der Leuchte veranlasst werden können.

Gemäß einer bevorzugten Ausführungsform ist die Steuereinrichtung dafür eingerichtet, um aus einer charakteristischen zeitlichen Veränderung des Lichtspektrums und der Lichtintensität des gemessenen Umgebungslichts auf eine Reflexion von Fahrzeugscheinwerfern von vorbeifahrenden Kraftfahrzeugen zu detektieren und daraus ein Verkehrsaufkommen zu berechnen, wobei die Steuereinrichtung ferner dafür eingerichtet ist, das Licht der Lichtquelle entsprechend dem berechneten Verkehrsaufkommen anzupassen. Das Licht von vorbeifahrenden Kraftfahrzeugen weist eine charakteristische zeitliche Veränderung auf. Ferner ist auch die spektrale Verteilung von Licht von Kraftfahrzeugen selbst bei unterschiedlichen Fahrzeugherstellern bekannt. Es lässt sich daher aus den Messwerten der Sensoreinheit von der Steuereinrichtung durch einen geeigneten Auswertalgorithmus auf die Zahl der vorbeifahrenden Fahrzeuge schließen. Dieses Ergebnis kann unmittelbar zur Steuerung der Leuchte genutzt werden, um z.B. bei hohem Verkehrsaufkommen die Helligkeit der Leuchte zu erhöhen. Ferner kann die Lichtquelle der Leuchte von der Steuereinrichtung auch so gesteuert werden, dass sie bei einem herannahenden detektierten Fahrzeug die Lichtintensität in einen Raumwinkelbereich, aus dem Fahrzeug detektiert wird, zu verringern, um eine Blendung des Fahrers zu verringern.

Weitere Merkmale und Vorteile der vorliegenden Erfindung werden aus der nachfolgenden Beschreibung bevorzugter Ausführungsformen deutlich, die in Verbindung mit den beigefügten Figuren gegeben wird. In den Figuren ist Folgendes dargestellt:
- Figur 1: zeigt eine Straßenleuchte gemäß einer Ausführungsform der Erfindung.
- Figur 2: zeigt einen Querschnitt durch die Straßenleuchte nach Figur 1 mit eingezeichneten Lichtstrahlen.
- Figur 3: zeigt den Querschnitt wie in Figur 2, ferner mit schematisch dargestelltem Umgebungslicht.
- Figur 4: zeigt die Leuchte nach Figur 1 mit Reflexionslicht.
- Figur 5: zeigt eine spektrale Zusammensetzung, welche die Sensoreinrichtung in einer Leuchte misst.
- Figur 6: zeigt eine von der Steuereinrichtung einer Leuchte ermittelte Farbtemperatur gegenüber dem Tagesverlauf.
- Figur 7: zeigt eine von der Sensoreinheit einer Leuchte gemessene Lichtintensität gegenüber dem Tagesverlauf.
- Figur 8: zeigt die Intensität nach Figur 7, wobei die Lichtintensität des von der Leuchte reflektierten Lichts subtrahiert ist.
- Figur 9: zeigt einen Nah-Infrarot-Anteil, welche die Steuereinrichtung einer Leuchte berechnet, gegenüber dem Tagesverlauf.
- Figur 10: zeigt eine von der Sensoreinheit gemessene Lichtintensität gegenüber dem Tagesverlauf mit Störeinflüssen.

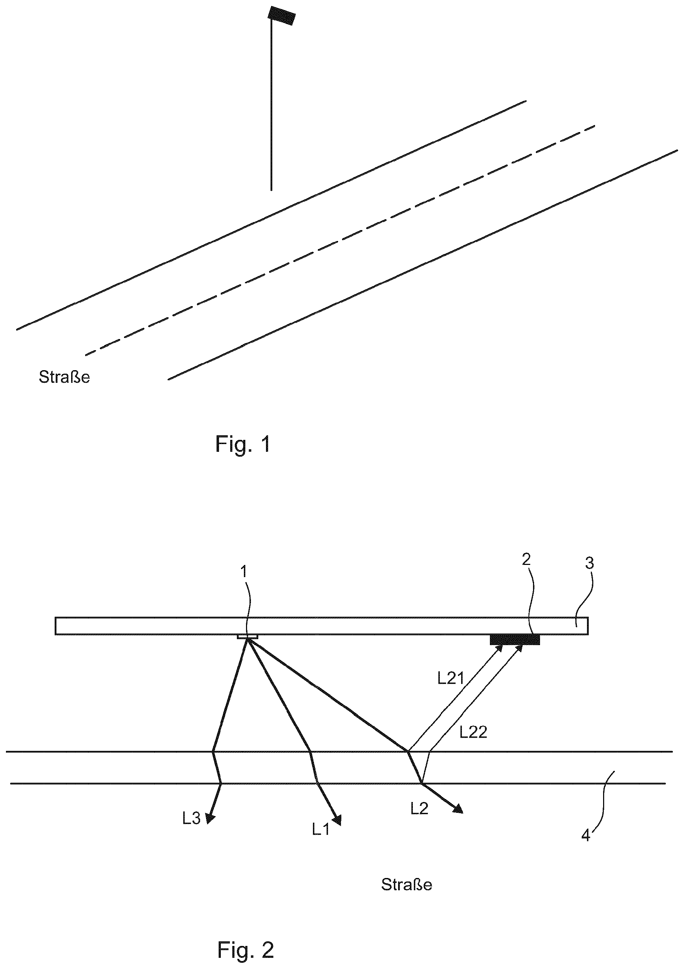

In Figur 1 ist schematisch eine Außenleuchte zur Ausleuchtung eines Straßenabschnittes, an dessen Rand sie angeordnet ist.

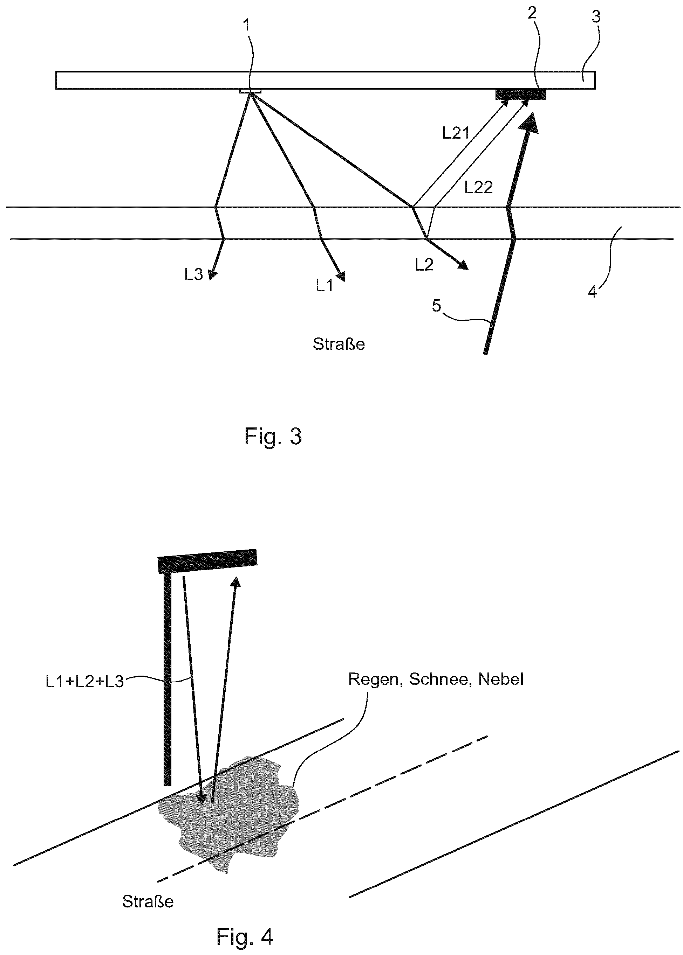

In Figuren 2 und 3 sind Querschnitte durch die Außenleuchte gemäß Figur 1 dargestellt. Als Leuchtmittel 1 in der Außenleuchte dient eine oder mehrere LED (lichtemittierende Diode). Neben der LED ist eine Sensoreinheit 2 zur Detektion von Licht vorgesehen, die sich in der gezeigten Ausführungsform auf einer gleichen Leiterplatte 3 wie LED 1 befindet. Die Anordnung ist durch eine transparente Abdeckung 4, z.B. aus Glas, PC oder PMMA, abgedeckt, wobei sich die Sensoreinheit 2 und das Leuchtmittel 1 hinter der gemeinsamen Abdeckscheibe befinden. Die Lichtstrahlen L1, L2 und L3 zeigen beispielhaft Lichtstrahlen, die von dem Leuchtmittel 1 ausgehen. Reflexionen an der Abdeckung 4 erzeugen Lichtstrahlen L21 und L22, die wieder zurück auf die Sensoreinrichtung 2 gelenkt werden. In Figur 3 ist der gleiche Aufbau wie in Figur 2 dargestellt, nur dass zusätzlich schematisch auch noch ein Richtungspfeil 5 für das tageszeitabhängige Umgebungslicht dargestellt ist. Das Umgebungslicht 5 fällt von außen durch die Abdeckung 4 auf die Sensoreinheit 2. Dabei ist zu verstehen, dass die Richtung des Lichtstrahls 5 nur beispielhaft dargestellt ist. Selbstverständlich kann aus verschiedenen Richtungen Licht durch die Abdeckung 4 von außen auf die Sensoreinheit 2 auftreffen.

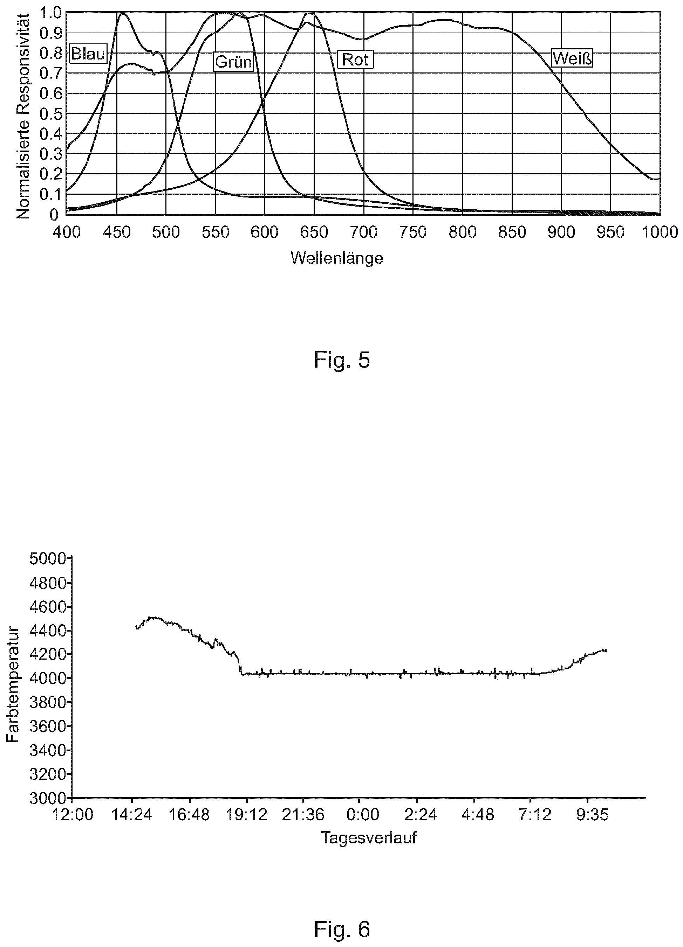

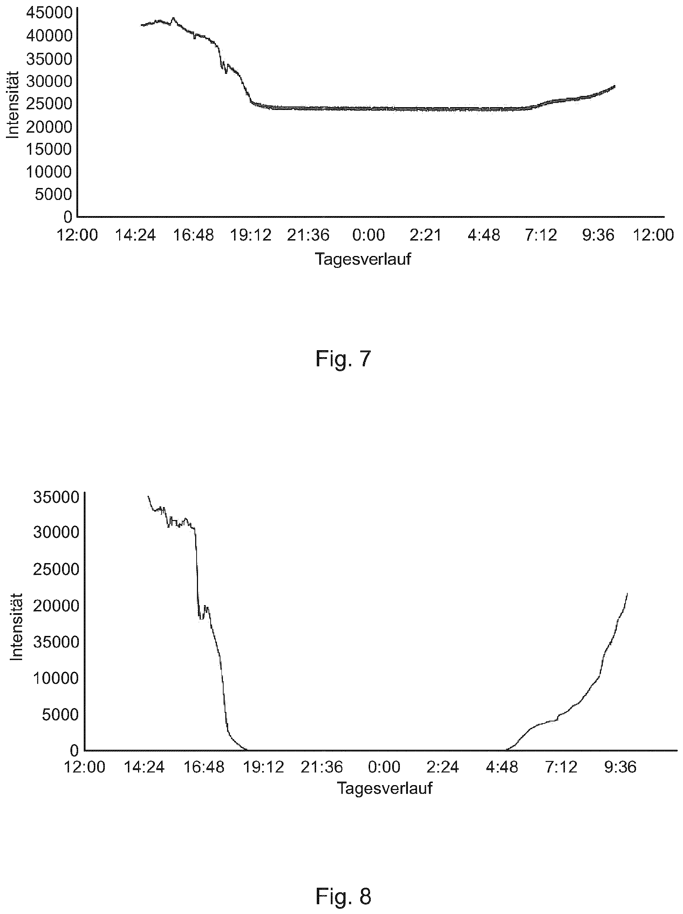

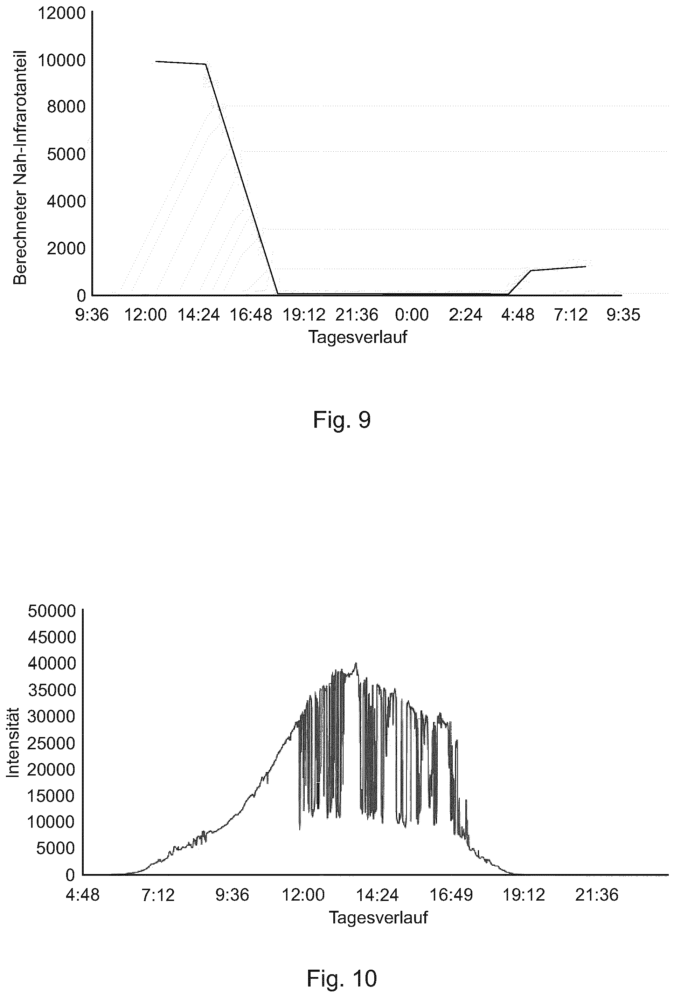

Die Sensoreinheit 2 ist dafür eingerichtet, das auf sie eintreffende Licht nicht nur in der Intensität, sondern auch spektral aufgelöst zu messen. Spektral aufgelöste typische Messkurven sind in Figur 5 dargestellt. Durch die spektrale Auflösung ergeben sich Möglichkeiten zur Detektion, z.B. des Tagesverlaufs bzw. des Sonnenaufgangs und -untergangs. Dazu sieht die Erfindung verschiedene Möglichkeiten vor, die in einem Algorithmus in einem Steuergerät der Leuchte integriert sein können: aus dem gemessenen Spektrum kann eine Farbtemperatur berechnet werden. Anhand der sich ändernden Farbtemperatur, wie beispielsweise in Figur 6 dargestellt, kann auf den Morgen bzw. Abend geschlossen werden, weil sich durch die Zerstreuung des Lichts in der Atmosphäre die Farbtemperatur des Umgebungslichts über den Tagesverlauf ändert. Davon unabhängig ist noch der Lichtanteil des von der Lichtquelle 1 reflektierten Lichts in dem an der Sensoreinheit gemessenen Lichts enthalten. Dieser ist unabhängig von der Tageszeit durch das Spektrum der Lichtquelle bestimmt und in dem vorliegenden Beispiel liegt er beispielsweise bei 4.000 K. Figur 6 zeigt eine Darstellung der Farbtemperatur über den Tagesverlauf. In den Nachtstunden von etwa 19.00 Uhr bis 7.30 Uhr liegt die Farbtemperatur etwa konstant bei 4.000 K, d.h. in dieser Zeit wird kein Umgebungslicht, sondern nur das von der Lichtquelle 1 reflektierte Licht an der Sensoreinheit 2 gemessen. Die Steuereinheit kann daher den Sonnenuntergang und den Sonnenaufgang einfach aus der Farbtemperatur bestimmen. Eine andere Möglichkeit besteht darin, den Sonnenuntergang und -aufgang direkt aus der Lichtintensität zu bestimmen, wie beispielsweise in Figur 7 dargestellt. Wie aus dem Diagramm ersichtlich, bleibt die Lichtintensität in den Nachtstunden nahezu konstant. Dieser Lichtanteil entspricht dem von der Lichtquelle 1 reflektierten Licht, welches sich über die Nacht nicht ändert. Aus dem Abfall der Gesamtlichtintensität in den Abendstunden bzw. dem Anstieg in den Morgenstunden kann daher auf den Sonnenuntergang bzw. -aufgang geschlossen werden. Schließlich kann in einer weiteren Ausführungsform aus der spektralen Zusammensetzung der Infrarotanteil ermittelt werden, der sich durch die Sonne ergibt, wie in Figur 9 dargestellt. Der Infrarotanteil kann beispielsweise aus dem Verhältnis der Spektralanteile bei Rot, Grün und Blau zu der Gesamtintensität bei der Farbe Weiß bestimmt werden. Diese spektrale Differenz gibt unmittelbar Aufschluss über den Sonnenverlauf am Morgen bzw. Abend.

Aus den gewonnen Daten über die Uhrzeit des Sonnenaufgangs bzw. Sonnenuntergangs kann über eine Steuereinrichtung (in den Figuren nicht gezeigt) die Helligkeit der Lichtquelle geregelt werden. Auch innerhalb der Dämmerungsstunden kann das Licht entsprechend dem gewünschten Helligkeitsgrad geregelt werden. Eine weitere Möglichkeit, neben der Dämmerungsfunktion, ist auch das Berücksichtigen der Mondphase. Bei Vollmond wird auch in den Nachtstunden weniger Kunstlicht benötigt als bei Neumond. Da auch der Anteil des Mondlichts aus der spektralen Verteilung des gemessenen Umgebungslichts ermittelt werden kann, kann auch der Kunstlichtanteil in der Nacht entsprechend geregelt werden, um einen weiteren Effekt zur Energieeinsparung zu erzielen. Die Regelung des von der Leuchte abgegebenen Lichts kann individuell an der Leuchte parametriert werden. Ein fester Ein- und Ausschaltzeitpunkt der Lichtquelle kann ebenso beispielsweise als eine Schaltschwelle und/oder mit einer Hysterese definiert werden.

Eine weitere Möglichkeit, welche die Ausführungsform der erfindungsgemäßen Leuchte bietet, ist in Figur 4 dargestellt. Wie in Figur 1 ist eine Außenleuchte an einer Straße angeordnet. Die Straße ist jedoch witterungsbedingt z.B. durch Nässe, Eis oder Schnee bedeckt. Ferner kann auch bodennah Nebel vorhanden sein. Diese Witterungsbedingungen erhöhen den Anteil des Lichts, welcher in die Leuchte abgebeben und in die Leuchte wieder zurückreflektiert wird. Der Lichtstrahl L4 in Figur 4 zeigt schematisch diese Reflexion bzw. das Streulicht der Witterungsereignisse. Die dadurch erhöhte Lichtmenge, welche im Vergleich zu einer trockenen Straße in der Sensoreinheit 2 detektiert wird, kann in der Steuereinrichtung von dem übrigen Umgebungslicht, welches sich über den Tagesverlauf ändert, wie vorhergehend beschrieben, unterschieden werden. Die veränderte Fahrbahnoberfläche reflektiert das Licht der Lichtquelle 2 je nach Witterungsbedingungen in unterschiedlicher Form. Durch eine spiegelnde und/oder diffuse Reflexion direkt an der Fahrbahn kann sich auch die spektrale Zusammensetzung des Reflexionslichtes verändern. Die Bedeckung der Fahrbahn kann daher aus der spektralen Zusammensetzung des Reflexionslichts L4 in der Steuereinrichtung analysiert werden. Die Unterschiede in der spektralen Zusammensetzung der Reflexion und der Lichtintensität können beispielsweise ausgenutzt werden, um auf die Art der Bedeckung der Straße (z.B. Schnee, Eis oder Nässe) zu schließen. Dadurch kann die Straße besser ausgeleuchtet werden. Beispielsweise können bei Nässe störende Reflexionen vermieden werden, indem der Helligkeitsgrad der Leuchte reduziert wird, insbesondere in einem Raumwinkelbereich, welcher durch Reflexion einer Straßenoberfläche zu einer Blendung der Verkehrsteilnehmer führen könnte.

Des Weiteren kann die Sensoreinheit 2 in Figur 3 zur Bestimmung der Farbtemperatur des Umgebungslichts genutzt werden. Durch die spektrale Zusammensetzung, wie in Figur 5 dargestellt, kann die Farbtemperatur berechnet werden. Dies eröffnet Vorteile für Leuchten im Innenbereich, z.B. für Industrieanwendungen in Fertigungsgebäuden oder Bürogebäuden. Durch das Detektieren der Farbtemperatur kann das Niveau des Sonnenlichts während des Tages bestimmt werden. Die Leuchte im Innenbereich kann Kunstlicht erzeugen, welches der sich verändernden Lichtfarbe der aktuellen Phase der Sonne anpasst. Das wiederum kann das Wohlbefinden der Mitarbeiter fördern. Ferner kann diese Ausführungsform auch eine Veränderung der Lichtfarbe durch Alterung der Lichtquelle über deren Lebenszeit bestimmt werden, um eine Farbverschiebung der Leuchte frühzeitig zu erkennen.

Durch signifikante Änderungen bzw. steile Gradienten in der gemessenen Lichtintensität kann ferner auch auf mögliche Störgrößen, wie z.B. Astwuchs oder vorbeifahrende Autos bei Außenleuchten, geschlossen werden. Die Sensoreinheit 2 misst während des Tages das einfallende Licht der Sonne, welches durch den Schattenwurf von Ästen sich unterscheidet. Da die Äste bzw. Bäume kontinuierlich in Bewegung sind, ergeben sich signifikante Änderungen, wie beispielsweise in Figur 10 dargestellt. Aus dem periodischen Verhalten kann auf die Störgröße geschlossen werden. Auf die Störgröße kann mit einer entsprechenden Veränderung des Lichtstroms der Leuchte reagiert werden. Ferner kann vorgesehen sein, dass die Steuereinrichtung der Leuchte die Störung auch über eine Schnittstelle an eine Zentrale weiterleitet.

Zusätzlich können auch folgende Informationen zentral von der Steuereinrichtung über eine geeignete Schnittstelle weitergeleitet werden: eine altersbedingte Veränderung der Lichtfarbe der Leuchte, eine lokale Witterungsbedingung am Ort der Leuchte, ein Anzeichen für möglichen Astwuchs im Bereich der Leuchte, und/oder besonderes Verkehrsaufkommen durch Kraftfahrzeuge oder beleuchtete Fahrräder.

Der Algorithmus zum Detektieren der verschiedenen vorhergehend beschriebenen Ereignisse aus der spektral aufgelösten Lichtintensität des erfassten Umgebungslichts bzw. dem zurückreflektierten Licht kann auch durch künstliche Intelligenz erfolgen. Beispielsweise können bei einer Vielzahl von Leuchten Messwerte erfasst werden und mit realen detektierten Ereignissen und Wetterbedingungen verglichen werden. Aus den Trainingsdaten kann auf die Art der Störung oder der Wetterbedingung ein signifikantes Verhalten der Lichtintensität und dem Lichtspektrum abgeleitet werden, welches dann zur Detektion entsprechender Ereignisse in einem Algorithmus zur Auswertung der Lichtintensität und des Lichtspektrums in dem Steuergerät der Leuchte implementiert wird.

### BEZUGSZEICHENLISTE

- 1: Lichtquelle, insbesondere LED
- 2: Sensoreinheit
- 3: Leiterplatte
- 4: Abdeckung
- 5: Umgebungslicht
- L1, L2, L3: Lichtstrahl von Lichtquelle
- L4, L21, L22: reflektiver Lichtstrahl

## Patentansprüche

1. Leuchte, insbesondere Straßenleuchte oder Innenraumleuchte, aufweisend wenigstens eine Lichtquelle (1) zur Lichtabgabe der Leuchte und einer Sensoreinheit (2), welche eingerichtet ist, um ein Lichtspektrum und eine Lichtintensität von Umgebungslicht (5) und von der Lichtquelle (1) reflektiertem Licht zu messen, und eine Steuereinrichtung, welche dazu eingerichtet ist, die Messwerte der Sensoreinheit (2) auszuwerten, wobei der Anteil des von der Lichtquelle (1) der Leuchte selbst reflektierten Lichts im Verhältnis zu dem Anteil des Umgebungslichts (5) aus der spektralen Auswertung ermittelt wird, und die Lichtabgabe der Lichtquelle (1) in Abhängigkeit des gemessenen Lichtspektrums und der Lichtintensität zu steuern, wobei die Steuereinrichtung der Leuchte dafür eingerichtet ist, diese Auswertung des Lichtspektrums und der Lichtintensität zum Erfassen von Umgebungsbedingungen vorzunehmen und die Lichtquelle der Leuchte in Abhängigkeit der detektierten Umgebungsbedingungen zu steuern.

2. Leuchte nach Anspruch 1, wobei die Lichtquelle (1) und die Sensoreinheit (2) hinter einer gemeinsamen transparenten Abdeckung (4) der Leuchte angeordnet sind.

3. Leuchte nach einem der vorhergehenden Ansprüche, wobei die Steuereinrichtung dafür eingerichtet ist, um aus einer zeitlichen Veränderung des Lichtspektrums über den Tagesverlauf einen oder mehrere der folgenden Parameter zu bestimmen: den Sonnenaufgang, den Sonnenuntergang und/oder die Mondphase, und in Abhängigkeit des einen oder der mehrerer Parameter die Helligkeit der Lichtquelle (1) zu regeln.

4. Leuchte nach einem der vorhergehenden Ansprüche, wobei die Steuereinrichtung dafür eingerichtet ist, um eine Änderung des von der Lichtquelle (1) reflektierten Lichtanteils im Verhältnis zu dem von der Lichtquelle (1) abgegebenen Lichtintensität zu bestimmen und die Helligkeit der Lichtquelle (1) aufgrund der geänderten Reflexionsbedingungen anzupassen.

5. Leuchte nach einem der vorhergehenden Ansprüche, wobei die Steuereinrichtung dafür eingerichtet ist, um aus dem gemessenen Lichtspektrum eine Farbtemperatur des Umgebungslichts (5) zu bestimmen, und die eine Lichtquelle (1) oder die eine Lichtquelle (1) in Verbindung mit weiteren Lichtquellen (1) der Leuchte dafür eingerichtet ist, Licht unterschiedlicher Farbtemperaturen zu erzeugen, wobei die Steuereinrichtung in Abhängigkeit der gemessenen Farbtemperatur die wenigstens eine Lichtquelle (1) ansteuert, um eine Farbtemperatur des abgegebenen Lichtes in Abhängigkeit der gemessenen Farbtemperatur zu verändern, insbesondere daran anzupassen.

6. Leuchte nach einem der vorhergehenden Ansprüche, wobei die Steuereinrichtung dazu eingerichtet ist, eine zeitlich Abfolge von Intensitätsschwankungen aus der gemessenen Lichtintensität zu bestimmen und bei Vorliegen einer signifikanten Änderung der Intensitätsschwankungen auf eine Störgröße des Umgebungslichts (5) zu schließen und die Lichtabgabe der Lichtquelle (1) in Abhängigkeit der Störgröße anzupassen.

7. Leuchte nach einem der vorhergehenden Ansprüche, wobei die Steuereinrichtung dafür eingerichtet ist, um aus einer Änderung der Lichtintensität und/oder des Lichtspektrums des von der Lichtquelle (1) reflektierten Lichts auf eine Alterung der Lichtquelle (1) zu schließen und die Ansteuerung der Lichtquelle (1) entsprechend der Alterung der Lichtquelle (1) zur Kompensation der Alterung zu verändern.

8. Leuchte nach einem der vorhergehenden Ansprüche, wobei die Steuereinrichtung dafür eingerichtet ist, um aus einer charakteristischen zeitlichen Veränderung des Lichtspektrums und der Lichtintensität des gemessenen Umgebungslichts (5) eine Reflexion von Fahrzeugscheinwerfern von vorbeifahrenden Kraftfahrzeugen zu detektieren und daraus ein Verkehrsaufkommen zu berechnen, wobei die Steuereinrichtung ferner dafür eingerichtet ist, das Licht der Lichtquelle (1) entsprechend dem berechneten Verkehrsaufkommen anzupassen.

## Claims

1. Luminaire, in particular street luminaire or interior luminaire, having at least one light source (1) for emitting light of the luminaire and a sensor unit (2) which is configured to measure a light spectrum and a light intensity of ambient light (5) and light reflected by the light source (1), and a control device which is configured to evaluate the measured values of the sensor unit (2), wherein the proportion of the light reflected by the light source (1) of the luminaire itself in relation to the proportion of the ambient light (5) is determined from the spectral evaluation, and to control the light emission of the light source (1) as a function of the measured light spectrum and the light intensity, wherein the control device of the luminaire is configured to carry out this evaluation of the light spectrum and the light intensity in order to detect ambient conditions and to control the light source of the luminaire as a function of the detected ambient conditions.

2. Luminaire according to Claim 1, wherein the light source (1) and the sensor unit (2) are arranged behind a common transparent cover (4) of the luminaire.

3. Luminaire according to one of the preceding claims, wherein the control device is configured to determine one or more of the following parameters from a temporal change in the light spectrum over the course of the day: the sunrise, the sunset, and/or the moon phase, and to regulate the brightness of the light source (1) as a function of the one or more parameters.

4. Luminaire according to one of the preceding claims, wherein the control device is configured to determine a change in the light component reflected by the light source (1) in relation to the light intensity emitted by the light source (1) and to adapt the brightness of the light source (1) on the basis of the changed reflection conditions.

5. Luminaire according to one of the preceding claims, wherein the control device is configured to determine a color temperature of the ambient light (5) from the measured light spectrum, and the one light source (1) or the one light source (1) in conjunction with further light sources (1) of the luminaire is configured to generate light of different color temperatures, wherein the control device actuates the at least one light source (1) as a function of the measured color temperature in order to change, in particular to adapt, a color temperature of the emitted light as a function of the measured color temperature.

6. Luminaire according to one of the preceding claims, wherein the control device is configured to determine a temporal sequence of intensity fluctuations from the measured light intensity and, in the presence of a significant change in the intensity fluctuations, to infer a disturbance variable of the ambient light (5) and to adapt the light emission of the light source (1) as a function of the disturbance variable.

7. Luminaire according to one of the preceding claims, wherein the control device is configured to infer aging of the light source (1) from a change in the light intensity and/or the light spectrum of the light reflected by the light source (1) and to change the actuation of the light source (1) in accordance with the aging of the light source (1) in order to compensate for the aging.

8. Luminaire according to one of the preceding claims, wherein the control device is configured to detect a reflection of vehicle headlights of passing motor vehicles from a characteristic temporal change in the light spectrum and the light intensity of the measured ambient light (5) and to calculate a traffic volume therefrom, wherein the control device is furthermore configured to adapt the light of the light source (1) in accordance with the calculated traffic volume.

## Revendications

1. Lampe, en particulier réverbère ou lampe d'intérieur, présentant au moins une source de lumière (1) pour émission de lumière de la lampe et une unité de capteur (2) conçue pour mesurer un spectre de lumière et une intensité de lumière de la lumière ambiante (5) et d'une lumière réfléchie de la source de lumière (1),
et un dispositif de contrôle conçu pour évaluer les valeurs mesurées de l'unité de capteur (2), dans lequel la proportion de lumière réfléchie de la source de lumière (1) de la lampe réfléchie par elle-même est déterminée par rapport à la proportion de lumière ambiante (5) à partir de l'évaluation spectrale, et pour contrôler l'émission de lumière de la source de lumière (1) en fonction du spectre de lumière mesuré et de l'intensité de lumière,
dans laquelle le dispositif de contrôle de la lampe est conçu pour effectuer cette évaluation du spectre de lumière et de l'intensité de lumière pour détecter des conditions ambiantes et pour contrôler la source de lumière de la lampe en fonction des conditions ambiantes détectées.

2. Lampe selon la revendication 1, dans laquelle la source de lumière (1) et l'unité de capteur (2) sont disposées derrière un couvercle transparent commun (4) de la lampe.

3. Lampe selon l'une des revendications précédentes, dans laquelle le dispositif de contrôle est conçu pour déterminer, à partir d'une variation dans le temps du spectre de lumière au cours de la journée, un ou plusieurs des paramètres suivants : le lever du soleil, le coucher du soleil et/ou la phase de la lune, et pour régler la luminosité de la source de lumière (1) en fonction du ou des paramètres.

4. Lampe selon l'une des revendications précédentes, dans laquelle le dispositif de contrôle est conçu pour déterminer une variation de la proportion de lumière réfléchie de la source de lumière (1) par rapport à l'intensité de lumière émise par la source de lumière (1) et pour adapter la luminosité de la source de lumière (1) en raison des conditions de réflexion modifiées.

5. Lampe selon l'une des revendications précédentes, dans laquelle le dispositif de contrôle est conçu pour déterminer, à partir du spectre de lumière mesuré, une température de couleur de la lumière ambiante (5),
et ladite source de lumière (1) ou ladite source de lumière (1) en relation avec d'autres sources de lumière (1) de la lampe est conçue pour générer de la lumière ayant différentes températures de couleur, dans laquelle le dispositif de contrôle contrôle l'au moins une source de lumière (1) en fonction de la température de couleur mesurée, afin de modifier, en particulier d'y adapter, une température de couleur de la lumière émise en fonction de la température de couleur mesurée.

6. Lampe selon l'une des revendications précédentes, dans laquelle le dispositif de contrôle est conçu pour déterminer une succession dans le temps de variations d'intensité à partir de l'intensité de lumière mesurée et pour déduire, en présence d'une variation significative des variations d'intensité, une grandeur perturbatrice de la lumière ambiante (5) et pour adapter l'émission de lumière de la source de lumière (1) en fonction de la grandeur perturbatrice.

7. Lampe selon l'une des revendications précédentes, dans laquelle le dispositif de contrôle est conçu pour déduire, à partir d'une variation de l'intensité de lumière et/ou du spectre de lumière de la lumière réfléchie de la source de lumière (1), un vieillissement de la source de lumière (1) et pour modifier le contrôle de la source de lumière (1) en fonction du vieillissement de la source de lumière (1) pour compenser le vieillissement.

8. Lampe selon l'une des revendications précédentes, dans laquelle le dispositif de contrôle est conçu pour détecter, à partir d'une variation dans le temps caractéristique du spectre de lumière et de l'intensité de lumière de la lumière ambiante (5) mesurée, une réflexion de phares de véhicule de véhicules automobiles qui passent et pour calculer à partir de cela un volume de trafic, dans laquelle le dispositif de contrôle est en outre conçu pour adapter la lumière de la source de lumière (1) en fonction du volume de trafic calculé.
